# EUROPEAN PATENT SPECIFICATION

(11) **EP 0 688 685 B1**
(45) Date of publication and mention of the grant of the patent: **23.08.2000**
(21) Application number: 95304238.9
(22) Date of filing: 19.06.1995
(51) Int. Cl.: B60C 11/04, B60C 11/03

(54) **Pneumatic Tires**
Luftreifen
Bandage pneumatique

(30) Priority: 23.06.1994 JP 14143794; 24.06.1994 JP 14300594; 08.07.1994 JP 15705994; 17.10.1994 JP 25098694; 22.11.1994 JP 28766694
(43) Date of publication of application: 27.12.1995
(73) Proprietor: Bridgestone Corporation, Tokyo (JP)
(72) Inventor: Takahashi, Ichiro, Tokyo (JP); Iwasaki, Shizuo, Tokyo (JP); Hayashi, Kazuo, Tokyo (JP); Shimizu, Nobukazu, Tokyo (JP); Ito, Shungo, Sayama City, Saitama Pref. (JP)
(74) Representative: Whalley, Kevin

(56) References cited:
- EP-A- 0 064 934
- EP-A- 0 089 307
- EP-A- 0 089 308
- EP-A- 0 477 542
- EP-A- 0 625 435
- DE-U- 8 620 979
- DE-U- 9 002 986

## Description

This invention relates to pneumatic tires having improved high-speed running performance, and more particularly to a pneumatic radial tire for passenger cars simultaneously establishing an improvement of wet performance and a reduction of pattern noise without sacrificing other primary performances of the tire.

In order to improve the high-speed running performance, a pneumatic tire of this type usually has a structure wherein a base portion of a tread is reinforced with a belt of inextensible cord plies. On the other hand, a ratio of height to width in tire section (or aspect ratio) is made smaller from the viewpoint of tire shape. In the latter case, an aspect ratio of about 0.6 is usually adapted to the tire, but there have recently appeared super-low section profile tires having an aspect ratio of 0.3.

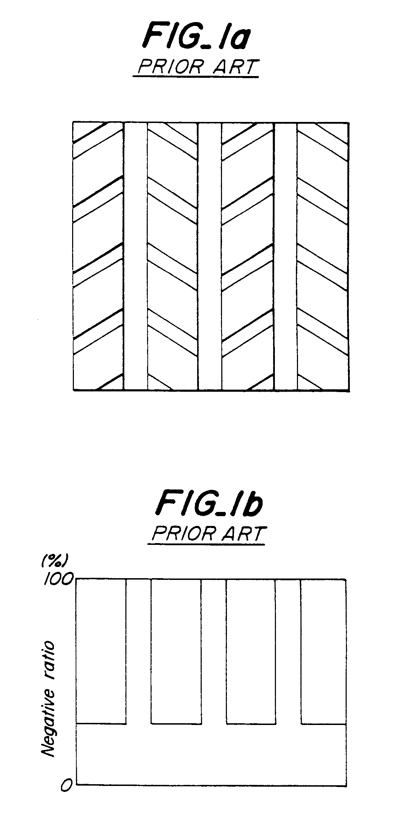

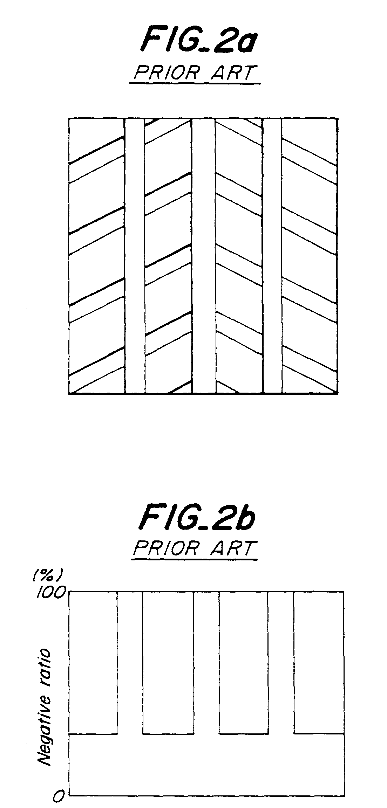

As the tire section becomes flat, the tire width and hence the tread width of the tire becomes wider. In such a tire, it is known that the steering stability a on dry road surface is improved, but the drainage property of the ground contact area on a wet road surface is inversely degraded, so that slipping on a wet road surface is apt to be caused during running at a higher speed. In order to improve the running performance on the wet road surface or so-called wet performance, it is particularly important to enhance the drainage property inherent to the tread pattern. As a tread pattern having an improved drainage property, it is usual to use a combination of circumferential grooves each extending in a straight form in the circumferential direction of the tire and slant grooves crossing with the circumferential grooves at a given inclination angle with respect to the circumferential direction of the tire as shown, for example, in Figs. 1a and 2a of the accompanying drawings. In such a tread pattern, excellent drainage property is attained by the circumferential grooves having a relatively wide width and also the distribution of ground contact pressure is adequate. However, the land portion of the tread is divided into blocks by the circumferential grooves and the slant grooves in order to improve the drainage property, so that the rigidity of the tread is apt to be lacking due to such a block structure to thus lower the steering stability. Furthermore, vibrations are created by the impact of these blocks at their stepping-in side with the road surface during the running of the tire or by friction between the blocks and the road surface at the stepping-in and kicking-out sides, and increased by the circumferential grooves, to cause a problem of pattern noise.

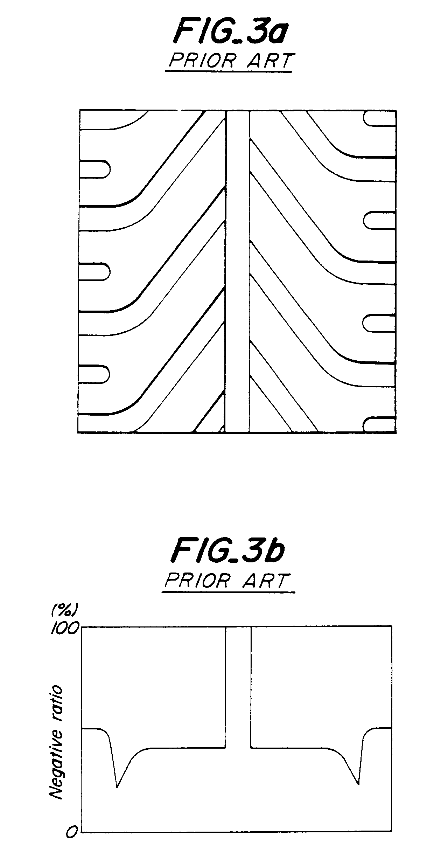

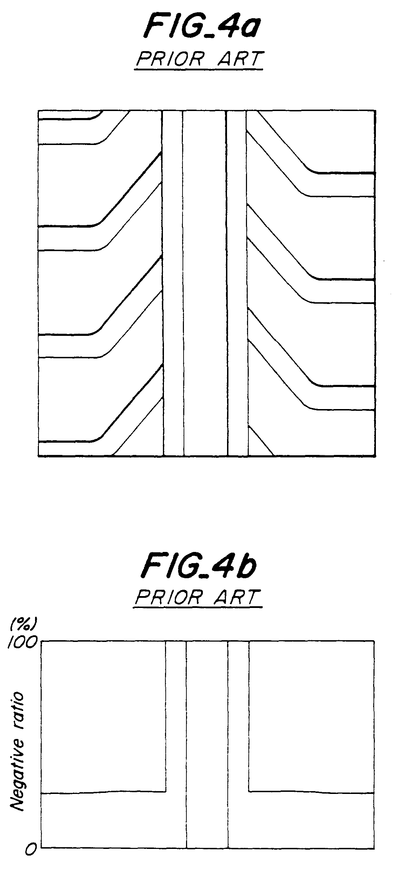

There are known another tread patterns as shown in Figs. 3a and 4a of the accompanying drawings in which the slant grooves are combined with one or two straight circumferential grooves located in a central region of the tread. In this case, excellent drainage property is obtained, but pattern noise is caused due to the presence of the circumferential groove likewise the aforementioned case. Moreover, the distribution of ground contact pressure is inadequate to degrade the steering stability and uneven wear is apt to be caused.

In these conventional tread patterns, good drainage property can be ensured by the circumferential grooves having a wide width, but pattern noise is undesirably caused as mentioned above. In certain circumstances, the required rigidity can not be obtained in the land portion of the tread, which brings about degradation of the resistance to uneven wear and the cornering performance.

Instead of the combination of the straight circumferential grooves and the slant grooves, there has recently been developed a tread pattern in which a plurality of main grooves each extending from a central portion of the tread toward each side end thereof in the form of a V-shaped configuration at a large inclination angle with respect to an axial direction of the tire are arranged on the tread to divide the tread into many land portions of V-shaped configuration. In this case, since both side regions of the tread bear large lateral force applied during cornering, the extending direction of the main inclined groove is changed toward the axial direction at each side region of the tread (an inclination angle of about 20° with respect to the axial direction) while maintaining the same groove width to enhance the rigidity of the land portion at each side region. As a result, the width of the land portion at each side region of the tread in the circumferential direction becomes undesirably wide, and therefore such a land portion is bifurcated at each side region by additionally arranging a lug groove having the same width as the main groove in parallel to the main groove.

In the tire having the above tread pattern defined by main grooves of V-shaped configuration, it can be said that the steering stability and the prevention of the generation of noise during straight running are improved while maintaining the wet-skid performance. However, it is difficult to uniformly wear the land portion defined by the main grooves and extending in form of V-shaped configuration during the running of the tire because the wearing of the land portion at the kicking-out side is conspicuous as compared with that at the stepping-in side during the running of the tire. That is, there is caused a problem that heel and toe wear (uneven wear) is generated at a relatively initial running stage. Such heel and toe wear is particularly conspicuous at both side regions of the tread in which the land portion extends while decreasing the inclination angle with respect to the axial direction, and grows in depth and width as the running distance becomes longer. Finally, the appearance of the tread is degraded by such wearing and the ground contact property is also degraded, which adversely affects other tire performances such as steering stability, ride comfortability against vibrations and the like.

Attention is also drawn to the disclosure of EP-A-0625435, which was not however published until 23 November 1994, and is therefore not prejudicial to the inventive step of the claims of the present application.

Attention is further drawn to the disclosure of EP-A-0089307, which shows a tire corresponding to the preamble of claim 1.

It is, therefore, an object of the present invention to provide pneumatic tires, particularly pneumatic radial tires advantageously reducing pattern noise without sacrificing primary performances of the tire such as steering stability, wear resistance, wet performance and the like.

According to the invention, there is provided a pneumatic tire comprising a pair of sidewall portions connecting to each other through a crown portion, a radial carcass of at least one rubberized cord ply toroidally extending between a pair of bead portions, a belt of inextensible cord layers superimposed about the crown portion of the carcass, and a tread superimposed on the belt and comprised of a main tread portion and a pair of side tread portions and having a tread pattern defined by a plurality of main slant grooves arranged on the tread at a given interval in the circumferential direction of the tire in which said main slant grooves oppositely extend from positions separated by a given distance from an equatorial plane of the tire at both sides thereof in a central region of the tread toward both side ends of the main tread portion so as to be inclined with respect to the circumferential direction of the tire, said main slant grooves being arranged on both sides of the equatorial plane and extending from the central region of the tread towards the respective side ends thereof in a generally V-shaped configuration to define a directional tread pattern, wherein each of said main slant grooves extends from the central region toward the side end of the main tread portion at an inclination angle of 15-45° with respect to the circumferential direction of the tire and at an inclination angle of 75-105° in the vicinity of the side end to open at a narrow width in the side end of the main tread portion, wherein each of said main slant grooves extends in the central region from the vicinity of the equatorial plane toward a middle portion of the adjoining main slant groove in the circumferential direction in a convex arc-shaped configuration to the equatorial plane to open to said adjoining main slant groove, the said arc-shaped configuration having a radius of curvature of 30-150 mm, wherein an auxiliary groove having a width narrower than that of the main slant groove is arranged in each side region of the main tread portion so as to communicate said main slant grooves to each other, wherein a plurality of blocks aligned in a row in the circumferential direction of the tire are partitioned by a rib continuously extending on the equatorial plane in the circumferential direction of the tire, and wherein a negative ratio of a ground contact portion of the tread is gradually decreased from the central region toward the side end of the main tread portion.

The term "main tread portion" used herein means a region of the tread contacting with the ground during the straight running of the tire under 70% of a maximum design load when the tire is mounted onto a nominal rim and inflated under a nominal air pressure according to ETRTO standard for convenience sake. Furthermore, the term "side region of the main tread portion" used herein means a region corresponding to 5-15% of a ground contact width of the tread from the side end of the main tread portion toward the equatorial plane of the tire.

In preferred embodiments of the invention, the arc-shaped portions of the main slant grooves located in the vicinity of the equatorial plane form a line substantially extending in the circumferential direction of the tire; and the width of the main slant groove is gradually reduced toward each end thereof; and the main slant grooves are alternately arranged at both sides of the equatorial plane of the tire; and the auxiliary grooves form a groove substantially extending in the circumferential direction of the tire together with a part of the main slant groove; and the position of the auxiliary groove opening in the main slant groove is within a range of 50-85% of a half of the ground contact width from the side end of the main tread portion toward the equatorial plane of the tire; and at least a part of the auxiliary groove has a depth shallower than that of the main slant groove; and the maximum width of the rib is 10-30% of the ground contact width of the tread; and the block is divided by sipes arranged in parallel with the auxiliary groove in the same direction.

The invention will be further described with reference to the accompanying drawings, wherein:
Figs. 1a to 4a are schematic views illustrating various embodiments of conventional tread patterns, respectively;
Figs. 1b to 4b are graphs showing a distribution of negative ratio in the tread patterns of Figs. 1a to 4a, respectively;
Fig. 5 is a schematic section view illustrating an outer profile of an embodiment of a pneumatic tire according to the invention;
Fig. 6 is a schematic view illustrating an embodiment of the tread pattern of a tire according to the invention;
Fig. 7 is a graph showing a distribution of negative ratio in a widthwise direction of the tire shown in Fig. 6;
Fig. 8 is a sectional view taken along a line VIII-VIII of Fig. 6;
Fig. 9 is a sectional view taken along a line IX-IX of Fig. 6;
Fig. 10 is a sectional view taken along a line X-X of Fig. 6; and
Figs. 11 and 12 are schematic views illustrating embodiments of tread patterns used in a pair of front ana rear wheel tires according to the invention, respectively.

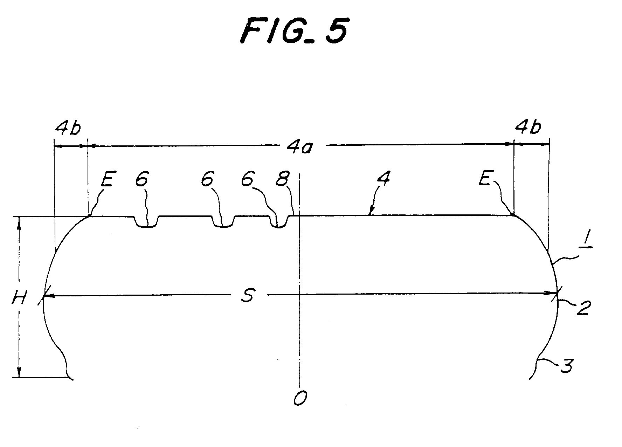

As shown in Fig. 5, a pneumatic radial tire 1 comprises a pair of sidewall portions 2 connecting to each other through a crown portion, a radial carcass (not shown) of at least one rubberized cord ply toroidally extending between a pair of bead portions 3, a belt (not shown) of at least two inextensible cord layers superimposed about the crown portion of the carcass, and a tread 4 superimposed on the belt and comprised of a main tread portion 4a and a pair of side tread portions 4b. The cords of the two cord layers in the belt are crossed with each other at a small cord angle with respect to the circumferential direction of the tire. That is, the structure of the tire 1 is the same as in the conventionally known pneumatic radial tire. Moreover, the tire 1 is a super-low section profile tire having an aspect ratio of section height H to section width S of 0.35.

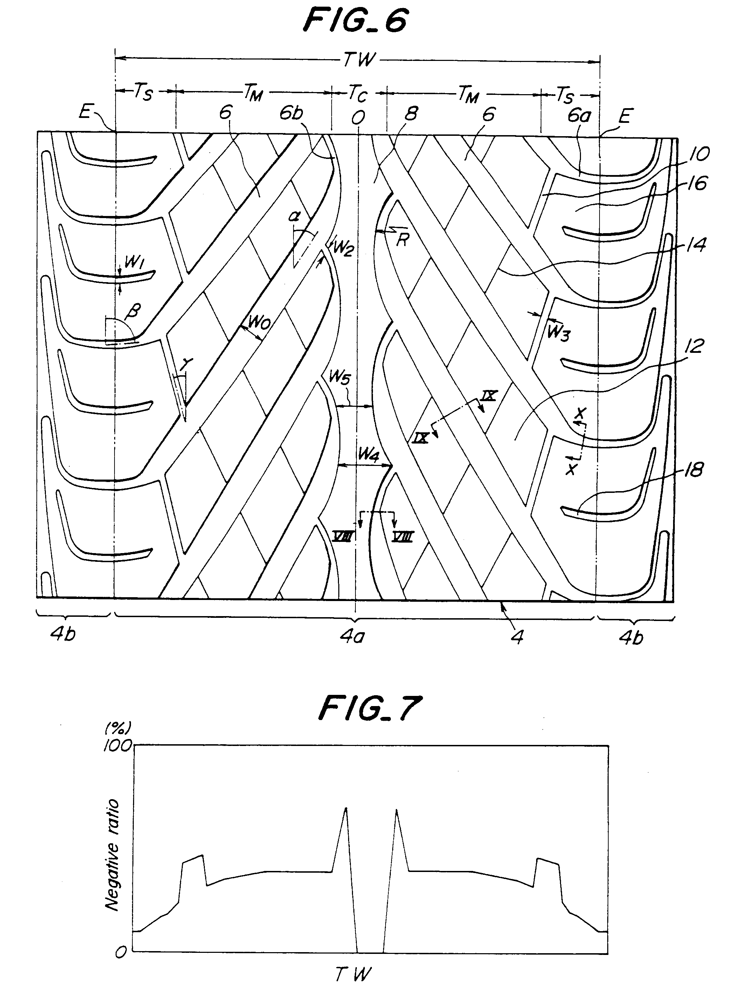

Fig. 6 shows the tread pattern of the tire 1 as a developed view of the tread 4. In such a tread pattern, T_{C} is a central region centering around an equatorial plane O of the tire at a width corresponding to 5-15% of a ground contact width TW of the main tread portion 4a, and T_{M} is a middle region located at both sides of the central region T_{C} at a width corresponding to 20-40% of the ground contact width TW, and T_{S} is a side region ranging from an end of the middle region T_{M} to a side end E of the main tread portion 4a.

In the tread pattern of Fig. 6, a plurality of main slant grooves 6 are arranged in the tread 4 at a given interval in the circumferential direction of the tire, in which these main slant grooves 6 are alternately shifted at both sides of the equatorial plane O (by a half pitch in the circumferential direction). These main slant grooves 6 oppositely extend from positions separated by a given distance from the equatorial plane O of the tire at both sides thereof in the central region T_{C} toward both side ends E of the main tread portion 4a so as to be inclined with respect to the circumferential direction of the tire, wherein each of the main slant grooves 6 extends from the central region T_{C} through the middle region T_{M} toward the side end E of the main tread portion 4a at an inclination angle α of 15-45°, preferably 20-40° with respect to the circumferential direction of the tire and at an inclination angle β of 75-105° in the vicinity of the side end E or in the side region T_{S} to open an end portion 6a of the main slant groove 6 at a narrow width in the side end E. On the other hand, each of the main slant grooves 6 extends in the central region T_{C} from the vicinity of the equatorial plane O toward a middle portion of the adjoining main slant groove 6 in the circumferential direction in a convex arc-shaped configuration to the equatorial plane O to open the other end 6b of the main slant groove 6 to the adjoining main slant groove 6. Thus, a rib 8 continuously extending in the circumferential direction of the tire is defined on the equatorial plane O of the tire by these main slant grooves 6.

Furthermore, an auxiliary groove 10 having a width narrower than that of the main slant groove 6 is arranged in each side region T_{S} of the main tread portion 4a at an inclination angle γ of not more than 25° with respect to the circumferential direction so as to communicate the main slant grooves 6 arranged in a row in the circumferential direction of the tire to each other to form a plurality of blocks 12 arranged at both sides of the rib 8 in a row in the circumferential direction. In the illustrated embodiment, the auxiliary groove 10 is arranged near to a boundary between the middle region T_{M} and the side region T_{S}. Each of the blocks 12 is divided into several parts by sipes 14 arranged substantially in parallel with the auxiliary groove 10, preferably extending substantially perpendicular to the main slant groove 6. In the illustrated embodiment, the block 12 is divided into four parts by three sipes 14.

In the side region T_{S}, side blocks 16 are defined by the end portions 6a of the main slant grooves 6 arranged in a row in the circumferential direction of the tire, the auxiliary grooves 10 and the tread side end E. Each of the side blocks 16 has a notch groove 18 extending outward from the tread side end E.

The main slant groove 6 has a depth of 5-10 mm and preferably extends so that its width gradually reduces toward each end portion of the main slant groove such that a width W₀ in the middle region T_{M} is 3-7% of the ground contact width TW, and an opening width W₁ of the end portion 6a at the tread side end E is 1-4% of the ground contact width TW, and an opening width W₂ of the other end portion 6b in the adjoining main slant groove is 1-4% of the ground contact width TW. Furthermore, a radius of curvature R of the arc-shaped configuration in the end portion 6b at the side of the equatorial plane O is within a range of 30-150 mm. Thus, the rib 8 defined between the end portions 6b of the main slant grooves 6 is a zigzag land portion continuously extending in the circumferential direction of the tire at a maximum width W₄ corresponding to 5-15% of the ground contact width TW and a minimum width W₅ corresponding to 3-12% of the ground contact width TW. Moreover, it is preferable that a ratio of the width W₁ to the width W₀ is within a range of 0.4-0.8.

Moreover, the auxiliary groove 10 has a width corresponding to 1-3% of the ground contact width TW and a depth of 4-7 mm. On the other hand, the notch groove 18 formed for rationalizing the rigidity in the vicinity of the tread side end E preferably has a width substantially equal to the opening width of the end portion 6b.

In addition, the sipe 14 has such a width that the opposed walls of the sipe are closed to each other at the ground contact area during running under loading, or a width of about 1-3 mm.

In the tire having a tread pattern defined by the above arrangement of grooves, the negative ratio of the ground contact portion of the tread as a whole is 25-35%, while the distribution of negative ratio in the widthwise direction of the ground contact portion is shown in Fig. 7 in which the negative ratio is maximum in a zone adjacent to the rib 8 and gradually decreases toward the tread side end E. Preferably, the vicinity of the boundary between the middle region T_{M} and the side region T_{S} has a negative ratio corresponding to 50-80% of the maximum negative ratio, while the side region T_{S} has a negative ratio corresponding to 15-30% of the maximum negative ratio.

For comparison, the distribution of negative ratio in the conventional tread patterns of Figs. 1a to 4a is shown in Figs. 1b to 4b, respectively.

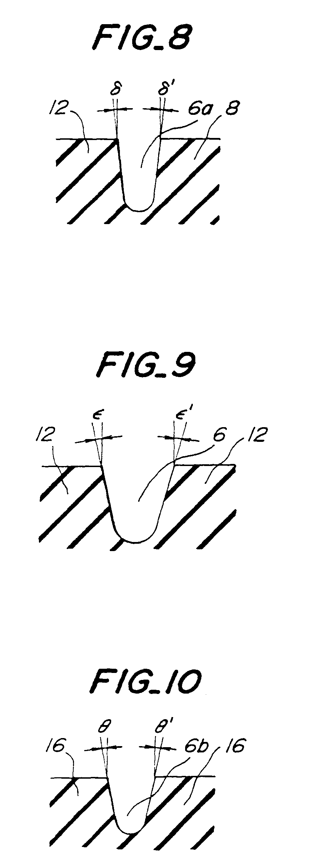

In the tire shown in Figs. 5 and 6, the functions taken by the main slant groove and the land portion differ in the central region T_{C}, middle region T_{M} and side region T_{S} of the ground contact portion of the tread. In the central region T_{C}, a pair of circumferential grooves located at both sides of the equatorial plane are defined by opening the end portion 6b of the main slant groove 6 in the adjoining main slant groove 6, in which the opposed groove walls of the end portion 6b are rendered into a U-shaped configuration at an inclination angle (δ, δ') of 0-10° with respect to a normal line drawn on the outer surface of the tread as shown in Fig. 8, whereby the space volume of the end portion 6b is enlarged under a restricted shape condition to improve the drainage property in the circumferential direction.

The middle region T_{M} is a region subject to lateral force created during cornering in addition to the drainage property. Since each of the main slant grooves has a width wider than that of the end portion 6b, the land portion defined by these main slant grooves 6 is apt to generate heel and toe wear. Therefore, the opposed groove walls of the main slant groove 6 are inclined at an angle (ε, ε') of 5-20° with respect to a normal line in a U-shaped configuration and the inclination angle ε' at the stepping-in side is larger than the inclination angle ε at the kicking-out side as shown in Fig. 9, whereby the deformation of the land portion in front and back directions at the kicking-out side is controlled to prevent the occurrence of heel and toe wear.

The side region T_{S} is a region subject to a large lateral force during cornering. Particularly, the occurrence of heel and toe wear is conspicuous in the land portion of such a region. Therefore, the extending direction of the end portion 6a of the main slant groove 6 is changed substantially in parallel with the axial direction of the tire, while the opposed groove walls of the end portion 6a in the main slant groove 6 are inclined at an angle (θ, θ') of 5-15° with respect to a normal line in a U-shaped configuration and the inclination angle θ' at the stepping-in side is larger than the inclination angle θ at the kicking-out side as shown in Fig. 10, whereby the deformation of the land portion in front and back directions at the kicking-out side is controlled to prevent the occurrence of heel and toe wear.

The behaviour of water in the ground contact portion of the tread on a wet road surface is as follows: that is, water flows forward in the circumferential direction of the tire or at an angle of less than 20° with respect to the circumferential direction in the vicinity of the central region T_{C} of the tread at the stepping-in side thereof, and flows forward at an angle of 20-40° with respect to the circumferential direction in the middle region T_{M} of the tread, and then flows outward from the tire at an angle of more than 40° with respect to the circumferential direction in the side region T_{S} of the tread. In the tire according to the invention, therefore, excellent drainage property is ensured through the division of the ground contact portion of the tread by a plurality of main slant grooves each extending at an inclination angle of 15-45° with respect to the circumferential direction of the tire in the middle region T_{M} and at a small inclination angle with respect to the circumferential direction in an arc-shaped configuration in the central region T_{C} and at a large inclination angle with respect to the circumferential direction in the side region T_{S} so as to correspond with the behaviour of water on the ground contact area of the tread.

When the inclination angle of the main slant groove in the middle region of the tread is less than 15° with respect to the circumferential direction of the tire, the necessary rigidity can not be given to the blocks defined between the main slant grooves and degradation of the steering stability and occurrence of uneven wear are caused, while when said angle exceeds 45°, the required drainage property can not be ensured. Similarly, the reason why the inclination angle of the main slant groove in the side region of the tread is limited to a range of 75-105° with respect to the circumferential direction is due to the fact that when said angle is less than 75°, the traction force is insufficient, while when said angle exceeds 105°, uneven wear is caused.

Moreover, the width of the main slant groove is wider in the middle region and gradually decreases toward both end portions to change the negative ratio as mentioned later in detail.

Also, the end portion of the main slant groove in the central region of the tread is connected by the arc-shaped configuration to the adjoining main slant groove, whereby the rib continuously extending in the circumferential direction is formed in the central region of the tread. The formation of such a rib can suppress an impact component largely influencing the pattern noise in the central region to realize a reduction of noise. When the radius of curvature of the arc-shaped configuration in the end portion is too large, the main slant groove brings about the occurrence of columnar resonance likewise a straight groove extending in the cir umferential direction of the tire, while when said radius of curvature is too small, the rigidity of the land portion in the vicinity of the end portion of the main slant groove considerably lowers and uneven wear is apt to be caused. For this end, the radius of curvature of the arc-shaped configuration is 30-150 mm.

In the tread pattern of the tire of Figs. 5 and 6, the arc-shaped end portion of the main slant groove is connected to the adjoining main slant groove in the central region to form a zigzag groove substantially and continuously extending in the circumferential direction of the tire, while the auxiliary groove is connected to a part of the main slant groove in the side region to form a zigzag groove substantially and continuously extending in the circumferential direction of the tire, whereby the drainage property is further improved. Furthermore, since these grooves extend zigzag in the circumferential direction of the tire, vibration energy produced by colliding with the road surface at the stepping-in side during the running of the tire is absorbed by the groove walls of these grooves to effectively reduce the noise. Moreover, the rigidities of the rib and blocks defined by these grooves are rationalized to improve the steering stability and avoid the occurrence of uneven wear.

That is, the position of the land portion decreasing the rigidity due to the presence of the groove in the widthwise direction of the tread changes on the circumference, so that the concentration of tread deformation in the low rigidity portion in the widthwise direction can be controlled to make the ground contact pressure uniform as compared with the case of arranging the low rigidity portion on the same circumference through a straight groove. In case of the straight groove, the corner of the block becomes sharp and uneven wear is promoted. On the other hand, the occurrence of uneven wear is avoided by making the groove zigzag.

In the invention, it is preferable that the opening ends of the auxiliary groove in the side region are located from the equatorial plane toward the tread side end at a position corresponding to a range of 50-85% of a half of the ground contact width TW. When the opening position of the auxiliary groove exceeds 85%, the rigidity of the side block lowers and lack of traction force and degradation of running performance are caused to damage the steering stability, while when said position is less than 50%, the desired distribution of ground contact pressure is not obtained. More preferably, the opening position is within a range of 60-75% of half of the ground contact width TW.

Similarly, a distance between ends of the arc-shaped configurations in the opposed main slant grooves around the equatorial plane in the central region or a maximum width of the rib is preferably within a range of 10-30% of a half of the ground contact width TW. When the distance is less than 10%, the negative ratio in the central region becomes extremely large to degrade the steering stability and linearity in the steering (i.e. the relation between steering angle and steering force changes in linear form), while when said distance exceeds 30%, improvement of the drainage property is not obtained. More preferably, the distance is within a range of 7-13% of half of the ground contact width TW.

Furthermore, the negative ratio of the ground contact portion of the tread is gradually decreased from the central region toward the tread side end. Observing the hydroplaning phenomenon, water film is created in a zone ranging from the central region of the ground contact portion to the middle region thereof. Therefore, the ratio of negative ratio based on the main slant groove formed from the central region to the middle region to negative ratio of the ground contact portion as a whole is made sufficiently large for contributing to the improvement of the drainage property, in which the negative ratio is made maximum at both sides of the rib and is gradually decreased toward the tread side end.

In this case, the negative ratio in the vicinity of the boundary between the middle region and the side region in a zone ranging from the central region to the middle region is 50-80% of the maximum negative ratio in a zone adjacent to the rib in view of the drainage property, while the negative ratio of the side region largely affecting the steering stability rather than the drainage property is 15-30% of the maximum negative ratio for ensuring the rigidity of the tread.

In general, tires having the same size and structure are used in front and rear wheels of a four-wheeled passenger car. In the case of a high performance passenger car having a large output, however, a rear wheel tire is frequently larger than a front wheel tire in order to provide a road gripping force commensurate with a driving force over a wide ground contact area. As a combination of tires having different sizes, there are typically known tires for racing cars. In this case, the tires for front and rear wheels have a slick type tread pattern having no groove for fine weather or a block type tread pattern defined by plural circumferential straight grooves and many straight slant grooves crossing therewith for rainy weather. On the other hand, high performance passenger cars usually run on general-purpose roads, so that it is required to use a pair of tires for front and rear wheels having different tire sizes and developing excellent running performances irrespective of weather conditions.

In this connection, the invention also provides a tire pair comprising a front wheel tire having mainly an excellent drainage property and a rear wheel tire developing mainly an excellent gripping force with substantially the same tread pattern. According to the invention, when a combination of low section profile tires for front and rear wheels having different tire sizes and substantially the same tread pattern is applied to a high performance passenger car, provided that the tread pattern is the same as previously mentioned, the tread width of the rear wheel tire is wider than that of the front wheel tire, and the inclination angle of the main slant groove with respect to the equatorial plane in the rear wheel tire is larger than that in the front wheel tire. In such a combination of front and rear wheel tires, therefore, when the passenger car is run in rainy weather, water is discharged by the front wheel tire having an excellent drainage property, while the rear wheel tire is run on a locus of the front wheel tire immediately after the discharge of water to develop a more improved gripping force. Even in fine weather, excellent gripping force is developed by the rear wheel tire.

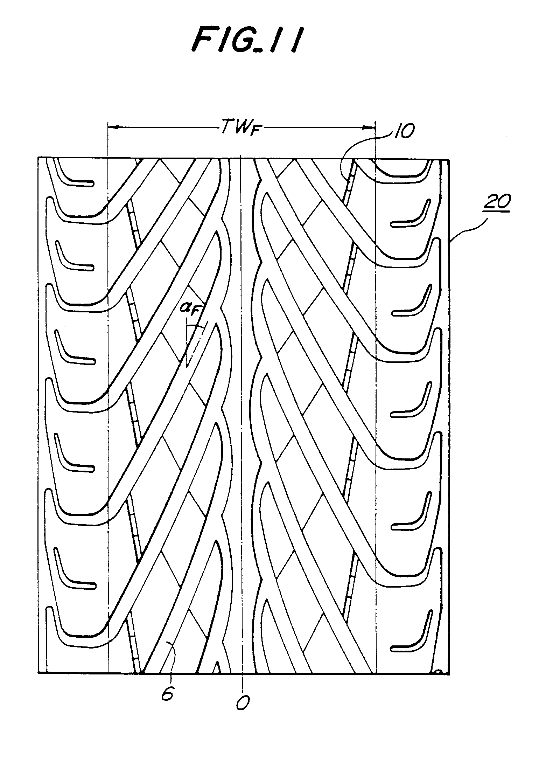

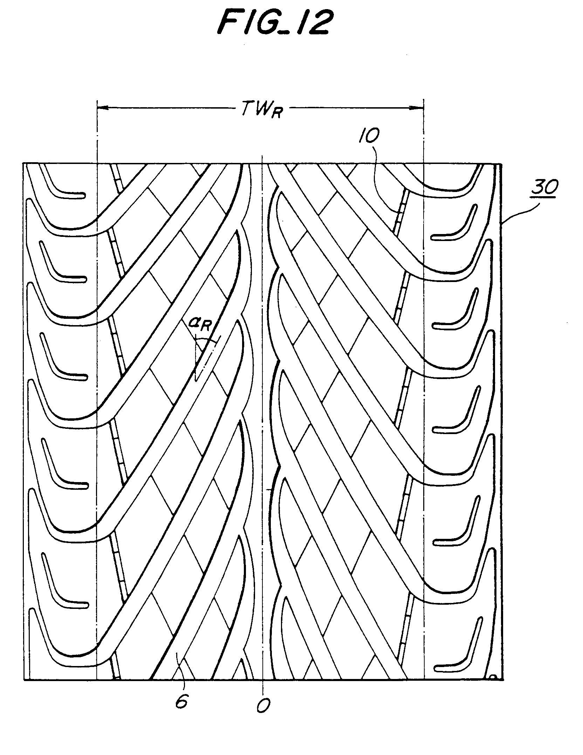

In such a pair of front and rear wheel tires according to the invention, a front wheel tire 20 and a rear wheel tire 30 have substantially the same tread pattern as shown in Figs. 11 and 12, in which the tread width TW_{R} of the rear wheel tire 30 is wider than the tread width TW_{F} of the front wheel tire 20 and the inclination angle α_{R} of the main slant groove 6 in the tire 30 is larger than the inclination angle α_{F} of the main slant groove 6 in the tire 20. The relation between the inclination angles α_{F} and α_{R} is substantially determined by the combination of the tire sizes in the tires 20 and 30, but it is preferable that the inclination angle α_{F} of the main slant groove 6 in the tire 20 is 20-35° and the inclination angle α_{R} of the main slant groove 6 in the tire 30 is 25-40° and the difference between the inclination angles α_{F} and α_{R} is within a range of 2-10°in order to sufficiently develop the functions required in these tires 20 and 30. In the embodiment of Figs. 11 and 12, the tire 20 has an aspect ratio of 0.4 and the tire 30 has an aspect ratio of 0.35, while the circumferential length of the tread is substantially the same between these tires.

Moreover, the depth of the auxiliary groove 10 in the tires 20 and 30 may be deeper in the middle region in the longitudinal direction thereof as shown in Figs. 11 and 12.

The following examples are given in illustration of the invention and are not intended as limitations thereof.

### Example 1

A test tire having a tire size of 235/45ZR17 ana a tread pattern shown in Fig. 6 is prepared according to a specification shown in Table 1. In this case, the ground contact width TW of the tread is 190 mm, and the circumferential length of the ground contact portion is 126 mm. Moreover, the negative ratio of the ground contact portion as a whole is 30% and the distribution of negative ratio in the widthwise direction is the same as shown in Fig. 7.

For comparison, four tires having the same tire size as mentioned above are prepared according to the tread patterns shown in Figs. 1a to 4a, in which the circumferential groove has a width of 15 mm and a depth of 8.5 mm, and the slant groove has a width of 12 mm, a depth of 7.5 mm and an inclination angle of 30°. These tires have the distribution of negative ratio as shown in Figs. 1b to 4b, respectively.

**Table 1**

| | | |
|---|---|---|
| Main slant groove | Width | W₀ : 11 mm |
| | | W₁ : 6 mm |
| | | W₂ : 4 mm |
| | Depth | 8.5 mm |
| | Inclination angle | α : 30° |
| | | β : 90° |
| | Radius of curvature in arc-shaped configuration | R : 80 mm |
| Auxiliary groove | Width | W₃ : 5 mm |
| | Depth | 5 cm |
| | Opening position | 65.71 mm from equational plane |
| | Inclination angle | γ : 15° |
| Rib | Maximum width | W₄ : 17 mm |
| | Minimum width | W₅ : 15 mm |
| Sipe | Number of sipes | 3 |
| | Inclination angle | 80° |
| | Width | 1 mm |

Each of these tires is inflated under an internal pressure of 2.5 kgf/cm² and mounted onto a vehicle and actually run under a two person riding load, during which the pattern noise, drainage property and steering stability are evaluated as follows:

The pattern noise is evaluated by measuring noise produced when the vehicle is inertially run from a speed of 55 km/h on a straight smooth road at a position separated by 7.5 mm from a microphone placed thereon.

The drainage property is evaluated by measuring a speed of generating the hydroplaning phenomenon when the vehicle is run on a wet road having a water depth of 10 mm.

The steering stability on a dry road surface is evaluated by a feeling test when the vehicle is run on a dry circuit having a radius of 50 m at various running modes.

The evaluated results are shown in Table 2. In this case, the result is represented by an index value on the basis that the conventional tire (Fig. 1) is 100 as a control, in which the larger the index value, the better the result.

**Table 2**

| | Conventional tire (Fig. 1) | Conventional tire (Fig. 2) | Conventional tire (Fig. 3) | Conventional tire (Fig. 4) | Invention tire (Fig. 6) |
|---|---|---|---|---|---|
| Pattern noise | 100 | 100 | 102 | 102 | 100 |
| Drainage property | 100 | 101 | 100 | 100 | 100 |
| Steering stability | 100 | 100 | 95 | 96 | 100 |

As seen from Table 2, the tire according to the invention can effectively reduce the pattern noise without sacrificing the drainage property while maintaining the steering stability on dry road at a sufficiently high level.

### Example 2

A test tire having a tire size of 225/40ZR18 is prepared to have a tread pattern as shown in Fig. 6, in which the inclination angle α of the main slant groove 6 is 65°, and the opposed groove walls of the main slant groove 6 have inclination angles of δ= 0° and δ'= 0° in the central region, ε= 5° and ε'= 20° in the middle region and θ= 0° and θ'= 5° in the side region, and the widths W₀ and W₁ are 11 mm and 4 mm, respectively.

A comparative tire is the same as the above test tire except that the end portion 6a of the main slant groove 6 in the side region has an inclination angle β of 70° and a width W₁ equal to the width W₀ and all of the inclination angles (δ, δ', ε, ε', θ and θ') in the opposed groove walls are 0°.

Each of these tires is assembled onto a rim of 18 x 8J and inflated under an internal pressure of 2.2 kgf/cm² and actually run at a speed of 50-150 km/h on a course including asphalted road and general-purpose road over a distance of 4000 km. After the running, a worn quantity due to heel and toe wear is measured with respect to these tires.

As a result, the worn quantity of the invention tire is smaller by 15-30% than that of the comparative tire, and also the appearance after the wearing is considerably improved.

### Example 3

A radial tire for a front wheel having a tire size of 255/40R18 and a radial tire for a rear wheel having a tire size of 295/35R18 are prepared according to tread patterns as shown in Figs. 11 and 12, respectively. In such a tire pair, the inclination angles α_{F} and α_{R} of the main slant groove are 28° and 33°, respectively. For comparison, two comparative tire pairs are provided so as to have the same tread pattern as mentioned above except that the inclination angle of the main slant groove in the comparative tire pair 1 is 28° and the inclination angle of the main slant groove in the comparative tire pair 2 is 33°, respectively. In these tire pairs, the negative ratio of the front wheel tire is 33% and that of the rear wheel tire is 31%.

After the front wheel tire is assembled onto a rim of 18 x 9J and the rear wheel tire is assembled onto a rim of 18 x 10.5J, these tires are inflated under an internal pressure of 2.5 kgf/cm² and mounted onto a vehicle and actually run, during which the steering stability on dry road surface and the drainage property on wet road surface are evaluated as follows.

The steering stability is evaluated as a 10 point scale by a feeling test for the degree of traction through acceleration at corner exit when the cornering limit running of the vehicle is carried out at a speed of 90-100 km/h on an asphalted circuit course. The drainage property is evaluated by measuring a speed of generating the hydroplaning phenomenon when the vehicle is run straight on a wet road having a water depth of 10 mm. The evaluated results are shown in Table 3.

**Table 3**

| | Invention tire pair | Comparative tire pair 1 | Comparative tire pair 2 |
|---|---|---|---|
| Steering stability | 7 | 5 | 7 |
| Drainage property (Km/h) | 84 | 84 | 79 |

## Claims

1. A pneumatic tire (1) comprising a pair of sidewall portions (2) connecting to each other through a crown portion, a radial carcass of at least one rubberized cord ply toroidally extending between a pair of bead portions (3), a belt of inextensible cord layers superimposed about the crown portion of the carcass, and a tread (4) superimposed on the belt and comprised of a main tread portion (4a) and a pair of side tread portions (4b) and having a tread pattern defined by a plurality of main slant grooves (6) arranged on the tread at a given interval in the circumferential direction of the tire in which said main slant grooves oppositely extend from positions separated by a given distance from an equatorial plane (O) of the tire at both sides thereof in a central region (T_{C}) of the tread toward both side ends (E) of the main tread portion (4a) so as to be inclined with respect to the circumferential direction of the tire, each of said main slant grooves (6) extending from the central region (T_{C}) toward the side end (E) of the main tread portion (4a) at an inclination angle of 15-45° with respect to the circumferential direction of the tire and at an inclination angle of 75-105° in the vicinity of the side end (E) wherein a plurality of blocks aligned in a row in the circumferential direction of the tire are partitioned by a rib (8) continuously extending on the equatorial plane in the circumferential direction of the tire, characterized by said main slant grooves (6) being arranged on both sides of the equatorial plane (O) and extending from the central region (T_{C}) of the tread towards the respective side ends (E) thereof in a generally V-shaped configuration to define a directional tread pattern, wherein said main slant grooves open at a narrow width in the side end of the main tread portion, wherein each of said main slant grooves (6) extends in the central region (T_{C}) from the vicinity of the equatorial plane (O) toward a middle portion of the adjoining main slant groove in the circumferential direction in a convex arc-shaped configuration to the equatorial plane to open to said adjoining main slant groove, the said arc-shaped configuration having a radius of curvature (R) of 30-150 mm, wherein an auxiliary groove (10) having a width narrower than that of the main slant groove (6) is arranged in each side region (T_{S}) of the main tread portion (4a) so as to communicate said main slant grooves to each other, and wherein a negative ratio of a ground contact portion of the tread is gradually decreased from the central region (T_{C}) toward the side end (E) of the main tread portion (4a).

2. A pneumatic tire as claimed in claim 1, characterized in that the arc-shaped portions of the main slant grooves (6) located in the vicinity of the equatorial plane (O) form a line substantially extending in the circumferential direction of the tire.

3. A pneumatic tire as claimed in claim 1 or 2, characterized in that the width (W_{O}) of the main slant groove (6) is gradually reduced toward each end thereof.

4. A pneumatic tire as claimed in any of claims 1 to 3, characterized in that the main slant grooves (6) are alternately arranged at both sides of the equatorial plane (O) of the tire.

5. A pneumatic tire as claimed in any of claims 1 to 4, characterized in that the auxiliary grooves (10) form a groove substantially extending in the circumferential direction of the tire together with a part of the main slant groove (6).

6. A pneumatic tire as claimed in any of claims 1 to 5, characterized in that the auxiliary groove (10) extends at an inclination angle of not more than 25° with respect to the circumferential direction of the tire.

7. A pneumatic tire as claimed in any of claims 1 to 6, characterized in that the position of the auxiliary groove (10) opening in the main slant groove (6) is within a range of 50-85% of a half of the ground contact width (TW) from the side end (E) of the main tread portion (4a) toward the equatorial plane (O) of the tire.

8. A pneumatic tire as claimed in any of claims 1 to 7, characterized in that at least part of the auxiliary groove (10) has a depth shallower than that of the main slant groove (6).

9. A pneumatic tire as claimed in any of claims 1 to 8, characterized in that the maximum width of the rib (8) is 10-30% of the ground contact width (TW) of the tread.

10. A pneumatic tire as claimed in any of claims 1 to 9, characterized in that the block (12) is divided by sipes (14) arranged in parallel with the auxiliary groove (10) in the same direction.

11. A pneumatic tire as claimed in any of claims 1 to 10, characterized in that opposed groove walls of the main slant groove (6) have such a relation of inclination angle with respect to a normal line drawn from an outer surface of the tread that the inclination angle is 0-10° in the central region (T_{C}), 5-20° in a middle region (T_{M}), and 5-15° in a side region (T_{S}), and the inclination angle of the groove wall in the middle region (T_{M}) and the side region (T_{S}) is larger at a stepping-in side than that at a kicking-out side.

12. A pneumatic tire as claimed in any of claims 1 to 11, characterized in that when a pair of the tires for front and rear wheels are applied to a high-speed, high performance passenger car, the ground contact width of the rear wheel tire is wider than that of the front wheel tire, and the inclination angle of the main slant groove (6) in the rear wheel tire with respect to the equatorial plane (O) is larger than that in the front wheel tire.

13. A high-speed, high performance passenger car comprising, on each side of the vehicle, a pair of tires for front and rear wheels as claimed in any of claims 1 to 12, characterized in that the ground contact width of the rear wheel tire is wider than that of the front wheel tire, and the inclination angle of the main slant groove (6) in the rear wheel tire with respect to the equatorial plane (O) is larger than that in the front wheel tire.

## Patentansprüche

1. Luftreifen (1), aufweisend zwei Seitenwandbereiche (2), die über einen Kronenbereich miteinander verbunden sind, eine radiale Karkasse aus mindestens einer gummigetränkten Cordlage, die sich toroidförmig zwischen zwei Wulstbereichen (3) erstreckt, einen Gürtel aus undehnbaren Cordschichten, der auf dem Kronenbereich der Karkasse angeordnet ist, und eine Lauffläche (4), die auf dem Gürtel angeordnet ist und aus einem Hauptlaufflächenbereich (4a) und zwei Seitenlaufflächenbereichen (4b) besteht, und ein Laufflächenmuster hat, das durch eine Vielzahl von schrägen Hauptrillen (6) definiert ist, die in einem vorgegebenen Abstand in der Umfangsrichtung des Reifens in der Lauffläche angeordnet sind, und bei dem sich die schrägen Hauptrillen von Positionen in einem zentralen Gebiet (T_{C}) der Lauffläche, die durch einen vorgegebenen Abstand von der Äquatorebene (O) des Reifens getrennt sind, zu den beiden Seitenrändern (E) des Hauptlaufflächenbereichs (4a) hin in entgegengesetzten Richtungen so erstrecken, daß sie bezüglich der Umfangsrichtung des Reifens geneigt sind, wobei sich jede der schrägen Hauptrillen (6) von dem zentralen Gebiet (T_{C}) zu dem Seitenrand (E) des Hauptlaufflächenbereichs (4) hin unter einem Neigungswinkel von 15-45° bezüglich der Umfangsrichtung des Reifens, und in der Nähe des Seitenrandes (E) unter einem Neigungswinkel von 75-105°C erstreckt, wobei eine Vielzahl von in der Umfangsrichtung des Reifens in einer Reihe angeordneten Blöcken durch eine Rippe (8) geteilt ist, die sich auf der Äquatorebene in der Umfangsrichtung des Reifens kontinuierlich erstreckt, dadurch gekennzeichnet, daß die schrägen Hauptrillen (6) auf beiden Seiten der Äquatorebene (O) angeordnet sind, und sich von dem zentralen Gebiet (T_{C}) der Lauffläche zu den jeweiligen Seitenrändern (E) der Lauffläche in einer im allgemeinen V-förmigen Konfiguration erstrecken, und ein gerichtetes Laufflächenmuster definieren, wobei sich die schrägen Hauptrillen bei einer geringen Breite in dem Seitenrand des Hauptlaufflächenbereichs öffnen, wobei sich jede der schrägen Hauptrillen (6) in dem zentralen Gebiet (T_{C}) von einer Stelle in der Nähe der Äquatorebene (O) zu einem mittleren Bereich der benachbarten schrägen Hauptrille hin in der Umfangsrichtung in einer zu der Äquatorebene hin konvexen, bogenförmigen Konfiguration erstreckt, und sich nach der benachbarten schrägen Hauptrille öffnet, wobei die bogenförmige Konfiguration einen Krümmungsradius (R) von 30-150 mm hat, wobei eine Hilfsrille (10), die eine kleinere Breite als die schräge Hauptrille (6) hat, in jedem Seitengebiet (T_{S}) des Hauptlaufflächenbereichs (4a) so angeordnet ist, daß sie die schrägen Hauptrillen miteinander verbindet, und wobei das negative Verhältnis des Bodenkontaktbereichs der Lauffläche von dem zentralen Bereich (T_{C}) zu dem Seitenrand (E) des Hauptlaufflächenbereichs (4a) hin allmählich abnimmt.

2. Luftreifen wie in Anspruch 1 beansprucht, dadurch gekennzeichnet, daß die in der Nähe der Äquatorebene (O) gelegenen, bogenförmigen Bereiche der schrägen Hauptrillen (6), eine Linie bilden, die sich im wesentlichen in der Umfangsrichtung des Reifens erstreckt.

3. Luftreifen wie in Anspruch 1 oder 2 beansprucht, dadurch gekennzeichnet, daß sich die Breite (W₀) der schrägen Hauptrille (6) zu jedem Ende der Hauptrille hin allmählich verringert.

4. Luftreifen wie in irgendeinem der Ansprüche 1 bis 3 beansprucht, dadurch gekennzeichnet, daß die schrägen Hauptrillen (6) auf beiden Seiten der Äquatorebene (O) des Reifens abwechselnd angeordnet sind.

5. Luftreifen wie in irgendeinem der Ansprüche 1 bis 4 beansprucht, dadurch gekennzeichnet, daß die Hilfsrillen (10) eine Rille bilden, die sich zusammen mit einem Teil der schrägen Hauptrille (6) im wesentlichen in der Umfangsrichtung des Reifens erstreckt.

6. Luftreifen wie in irgendeinem der Ansprüche 1 bis 5 beansprucht, dadurch gekennzeichnet, daß sich die Hilfsrille (10) unter einem Neigungswinkel von nicht mehr als 25° bezüglich der Umfangsrichtung des Reifens erstreckt.

7. Luftreifen wie in irgendeinem der Ansprüche 1 bis 6 beansprucht, dadurch gekennzeichnet, daß die Position der sich in die schräge Hauptrille (6) öffnenden Hilfsrille (10) innerhalb des Bereichs von 50-85% einer Hälfte der Bodenkontaktbreite (TW) von dem Seitenrand (E) des Hauptlaufflächenbereichs (4a) zu der Äquatorebene (O) des Reifens hin liegt.

8. Luftreifen wie in irgendeinem der Ansprüche 1 bis 7 beansprucht, dadurch gekennzeichnet, daß mindestens ein Teil der Hilfsrille (10) eine geringere Tiefe als die schräge Hauptrille (6) hat.

9. Luftreifen wie in irgendeinem der Ansprüche 1 bis 8 beansprucht, dadurch gekennzeichnet, daß die maximale Breite der Rippe (8) 10-30% der Bodenkontaktbreite (TW) der Lauffläche beträgt.

10. Luftreifen wie in irgendeinem der Ansprüche 1 bis 9 beansprucht, dadurch gekennzeichnet, daß der Block (12) durch Einschnitte (14) geteilt ist, die in der gleichen Richtung parallel zu der Hilfsrille (10) angeordnet sind.

11. Luftreifen wie in irgendeinem der Ansprüche 1 bis 10 beansprucht, dadurch gekennzeichnet, daß die einander gegenüberliegenden Rillenwände der schrägen Hauptrille (6) eine solche Beziehung des Neigungswinkels bezüglich einer von der äußeren Oberfläche der Lauffläche gezogenen, senkrechten Linie haben, daß der Neigungswinkel in dem zentralen Gebiet (T_{C}) 0-10°, in dem mittleren Gebiet (T_{M}) 5-20°, und in dem Seitengebiet (T_{S}) 5-15° ist, und der Neigungswinkel der Rillenwand in dem mittleren Gebiet (T_{M}) und dem Seitengebiet (T_{S}) auf der Eindrückseite größer ist als auf der Abhebeseite.

12. Luftreifen wie in irgendeinem der Ansprüche 1 bis 11 beansprucht, dadurch gekennzeichnet, daß dann, wenn zwei der Reifen für die Vorder- und Hinterräder bei einem Hochgeschwindigkeits-Hochleistungs-Personenwagen angebracht werden, die Bodenkontaktbreite bei dem Hinterradreifen größer ist als bei dem Vorderradreifen, und der Neigungswinkel der schrägen Hauptrille (6) bezüglich der Äquatorebene (O) bei dem Hinterradreifen größer ist als bei dem Vorderradreifen.

13. Hochgeschwindigkeits-Hochleistungs-Personenwagen, mit zwei Reifen auf jeder Seite des Fahrzeugs für die Vorder- und Hinterräder, wie in irgendeinem der Ansprüche 1 bis 12 beansprucht, dadurch gekennzeichnet, daß die Bodenkontaktbreite bei dem Hinterradreifen größer ist als bei dem Vorderradreifen, und der Neigungswinkel der schrägen Hauptrille (6) bezüglich der Äquatorebene (O) bei dem Hinterradreifen größer ist als bei dem Vorderradreifen.

## Revendications

1. Bandage pneumatique (1) comprenant une paire de parties de flanc (2) connectées l'une à l'autre par une partie de sommet, une carcasse radiale composée au moins d'une nappe de câblés caoutchoutés s'étendant toroïdalement entre une paire de parties de talon (3), une ceinture composée de nappes de câblés non extensibles superposée à la partie de sommet de la carcasse, et une bande de roulement (4) superposée à la ceinture et composée d'une partie principale de la bande de roulement (4a) et d'une paire de parties latérales de la bande de roulement (4b), et ayant une sculpture de bande de roulement définie par plusieurs rainures principales inclinées (6) agencées sur la bande de roulement à un intervalle donné dans la direction circonférentielle du bandage pneumatique, lesdites rainures principales inclinées s'étendant de manière opposée à partir de positions séparées d'une distance donnée d'un plan équatorial (O) du bandage pneumatique au niveau des deux côtés correspondants, dans une région centrale (T_{C}) de la bande de roulement, vers les deux extrémités latérales (E) de la partie principale de la bande de roulement (4a), de sorte à être inclinées par rapport à la direction circonférentielle du bandage pneumatique, chacune desdites rainures principales inclinées (6) s'étendant de la région centrale (T_{C}) vers l'extrémité latérale (E) de la partie principale de la bande de roulement (4a) à un angle d'inclinaison de 15 à 45° par rapport à la direction circonférentielle du bandage pneumatique et à un angle d'inclinaison de 75 à 105° au voisinage de l'extrémité latérale E, plusieurs blocs alignés dans une rangée dans la direction circonférentielle du bandage pneumatique étant séparés par une nervure (8), s'étendant en continu sur le plan équatorial dans la direction circonférentielle du bandage pneumatique, caractérisé en ce que lesdites rainures principales inclinées (6) sont agencées des deux côtés du plan équatorial (O) et s'étendent de la région centrale (T_{C}) de la bande de roulement vers les extrémités latérales respectives (E) correspondantes, dans une configuration ayant en général une forme en V, pour définir une sculpture directionnelle de la bande de roulement, lesdites rainures principales inclinées s'ouvrant à une largeur étroite dans l'extrémité latérale de la partie principale de la bande de roulement, chacune desdites rainures principales inclinées (6) s'étendant dans la région centrale (T_{C}), du voisinage du plan équatorial (O) vers une partie médiane de la rainure principale inclinée adjacente dans la direction circonférentielle, dans une configuration en arc convexe par rapport au plan équatorial pour s'ouvrir vers ladite rainure principale inclinée adjacente, ladite configuration en arc ayant un rayon de courbure (R) de 30 à 150 mm, une rainure auxiliaire (10) ayant une largeur inférieure à celle de la rainure principale inclinée (6) étant agencée dans chaque région latérale (T_{S}) de la partie principale de la bande de roulement (4a), de sorte à établir une communication entre lesdites rainures principales inclinées, un rapport négatif de la partie de contact au sol de la bande de roulement étant progressivement réduit de la région centrale (T_{C}) vers l'extrémité latérale (E) de la partie principale de la bande de roulement (4a).

2. Bandage pneumatique radial selon la revendication 1, caractérisé en ce que les parties en arc des rainures principales inclinées (6) agencées au voisinage du plan équatorial (O) forment une ligne s'étendant pratiquement dans la direction circonférentielle du bandage pneumatique.

3. Bandage pneumatique radial selon les revendications 1 ou 2, caractérisé en ce que la largeur (W₀) de la rainure principale inclinée (6) est réduite progressivement en direction de chaque extrémité correspondante.

4. Bandage pneumatique selon l'une quelconque des revendications 1 à 3, caractérisé en ce que les rainures principales inclinées (6) sont agencées de manière alternée au niveau des deux côtés du plan équatorial (O) du bandage pneumatique.

5. Bandage pneumatique selon l'une quelconque des revendications 1 à 4, caractérisé en ce que les rainures auxiliaires (10) forment une rainure s'étendant pratiquement dans la direction circonférentielle du bandage pneumatique, ensemble avec une partie de la rainure principale inclinée (6).

6. Bandage pneumatique selon l'une quelconque des revendications 1 à 5, caractérisé en ce que la rainure auxiliaire (10) s'étend à un angle d'inclinaison non supérieur à 25° par rapport à la direction circonférentielle du bandage pneumatique.

7. Bandage pneumatique selon l'une quelconque des revendications 1 à 6, caractérisé en ce que la position de la rainure auxiliaire (10) s'ouvrant dans la rainure principale inclinée (6) est comprise dans un intervalle représentant 50 à 85% d'une moitié de la largeur de contact au sol (TW), de l'extrémité latérale (E) de la partie principale de la bande de roulement (4a) vers le plan équatorial (O) du bandage pneumatique.

8. Bandage pneumatique selon l'une quelconque des revendications 1 à 7, caractérisé en ce qu'au moins une partie de la rainure auxiliaire (10) a une profondeur inférieure à celle de la rainure principale inclinée (6).

9. Bandage pneumatique selon l'une quelconque des revendications 1 à 8, caractérisé en ce que la largeur maximale de la nervure (8) représente 10 à 30% de la largeur de contact au sol (TW) de la bande de roulement.

10. Bandage pneumatique selon l'une quelconque des revendications 1 à 9, caractérisé en ce que le bloc (12) est divisé par des lamelles (14) agencées parallèlement à la rainure auxiliaire (10), dans la même direction.

11. Bandage pneumatique selon l'une quelconque des revendications 1 à 10, caractérisé en ce que des parois de rainure opposées de la rainure principale inclinée (6) ont une relation de l'angle d'inclinaison par rapport à une perpendiculaire tracée d'une surface externe de la bande de roulement telle que l'angle d'inclinaison est compris entre 0 et 10° dans la région centrale (T_{C}), entre 5 et 20° dans une région médiane (T_{M}) et entre 5 et 15° dans une région latérale (T_{S}), l'angle d'inclinaison de la paroi de rainure dans la région médiane (T_{M}) et la région latérale (T_{S}) étant plus grand au niveau du côté d'engagement qu'au niveau du côté de dégagement.

12. Bandage pneumatique selon l'une quelconque des revendications 1 à 11, caractérisé en ce que lorsqu'une paire de ces bandages pneumatiques pour les roues avant et arrière est appliquée à une voiture particulière rapide et très performante, la largeur de contact au sol du bandage pneumatique de la roue arrière est plus grande que celle du bandage pneumatique de la roue avant, l'angle d'inclinaison de la rainure principale inclinée (6) dans le bandage pneumatique de la roue arrière par rapport au plan équatorial (O) étant plus grand que celui dans le bandage pneumatique de la roue avant.

13. Voiture particulière rapide et très performante comprenant de chaque côté du véhicule une paire de bandages pneumatiques pour les roues avant et arrière selon l'une quelconque des revendications 1 à 12, caractérisée en ce que la largeur de contact au sol du bandage pneumatique de la roue arrière est plus grande que celle du bandage pneumatique de la roue avant, l'angle d'inclinaison de la rainure principale inclinée (6) dans le bandage pneumatique de la roue arrière par rapport au plan équatorial (O) étant plus grand que celui dans le bandage pneumatique de la roue avant.
